**Europäisches Patentamt**

**European Patent Office**

**Office européen des brevets**

(11) Numéro de publication : **0 516 607 A1**

# (12) DEMANDE DE BREVET EUROPEEN

(21) Numéro de dépôt : **92870081.4**

(22) Date de dépôt : **26.05.92**

(51) Int. Cl.⁵ : **F16L 55/16**

(30) Priorité : **31.05.91 BE 9100530**

(43) Date de publication de la demande :
**02.12.92 Bulletin 92/49**

(84) Etats contractants désignés :
**AT BE CH DE DK ES FR GB GR IT LI LU MC NL PT SE**

(71) Demandeur : **LE JOINT INTERNE BENELUX S.A.**
**Zone Industrielle**
**B-4432 Alleur (BE)**

(72) Inventeur : **Hartenstein, Marcel**
**rue Hullos 3**
**B-4122 Plainevaux (BE)**

(74) Mandataire : **Dellicour, Paul**
**Office de Brevets E. Dellicour rue Fabry 18/012**
**B-4000 Liège (BE)**

(54) **Procédé pour l'étanchement par l'intérieur des jonctions entre canalisations principales et branchements latéraux.**

(57)     Le procédé consiste en un collage d'une gaine (3) sur la surface interne à la fois du branchement (1) et de la canalisation principale (2) à l'endroit du piquage, la mise en place sous pression et par réversion de la gaine (3) s'effectuant au moyen d'un doigt de gant extensible (4).

FIG.5

EP 0 516 607 A1

Jouve, 18, rue Saint-Denis, 75001 PARIS

Les canalisations de distribution publiques ou privées (eau, gaz, égouts, eau chaude, vapeur, air comprimé, etc.) sont généralement raccordées aux abonnés par branchements latéraux.

Ces branchements sont raccordés à la canalisation principale à l'aide d'accessoires appropriés et celle-ci est percée à l'endroit de ces raccordements, ce qui constitue pour une canalisation principale un point faible. Certains matériaux, constituant la canalisation principale, tels que fonte, béton, asbest-ciment, etc. sont particulièrement sensibles à ce point faible.

En cas de tensions sur la canalisation principale dues à des mouvement de terrain, des pressions externes trop fortes ou autres, il se présente un phénomène de cassure, qui se situe généralement au point le plus faible de la canalisation, c'est-à-dire à l'endroit où elle a été percée, donc à l'endroit de la prise de branchement.

La présente invention a pour but de rendre étanche par l'intérieur l'endroit du raccordement canalisation/ branchement (appelé piquage) et de conserver cette étanchéité en cas de rupture de la canalisation principale.

Le procédé suivant l'invention permet d'atteindre ce but et assure l'étanchement à l'endroit du piquage grâce au collage d'une gaine sur la surface interne à la fois du branchement et de la canalisation principale.

Suivant l'invention la gaine est souple et extensible, de manière à reprendre toutes variations de diamètres des branchements.

Encore suivant l'invention le procédé consiste en l'utilisation d'un doigt de gant extensible pour la mise en place sous pression et par réversion de la gaine.

Pour mieux faire comprendre l'invention celle-ci est décrite maintenant avec plus de détails sur la base des dessins schématiques annexés, à titre d'exemples uniquement, montrant en :

Figure 1 une coupe d'un piquage avec la gaine d'étanchement suivant l'invention ;

Figures 2 et 3 en coupe les deux étapes de préparation de l'ensemble.

Figures 4 et 5 en coupe les deux étapes de positionnement de la gaine et du doigt de gant à l'intérieur du branchement.

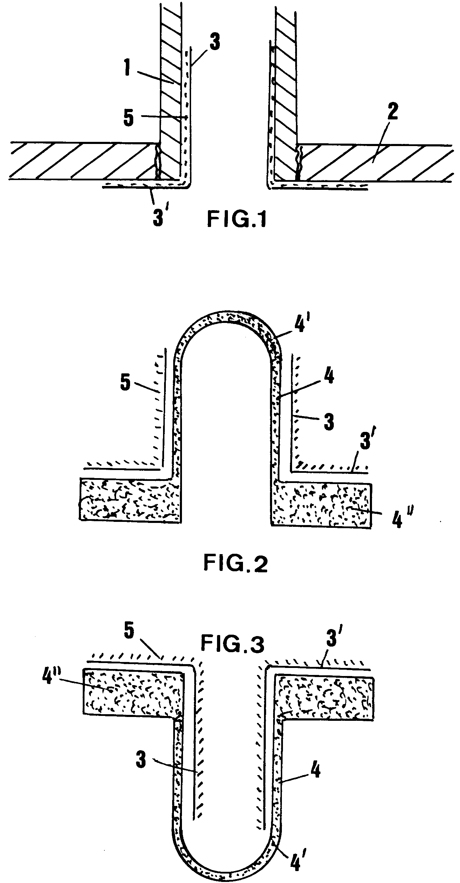

On a représenté aux dessins en figure 1 un piquage, c'est-à-dire le raccordement d'un branchement 1 sur une canalisation principale 2.

Pour assurer l'étanchement à l'endroit du piquage on utilise suivant l'invention une gaine souple 3 pourvue à l'une de ses extrémités d'une collerette souple 3′ en même matériau.

Cette gaine 3 est collée à l'intérieur du branchement 1 avec sa collerette 3′ collée sur la paroi interne de la canalisation principale 2.

Pour assurer la mise en place de la gaine souple 3 pourvue de colle à l'intérieur sur les parois du branchement 1 et de la canalisation principale 2 il est prévu suivant l'invention de l'introduire par réversion à l'aide d'un doigt de gant souple 4, lui-même réversible et gonflable.

Le doigt de gant 4, outil de mise en place et en pression de la gaine 3, est formé d'un tube souple mince, dont une extrémité 4′ est fermée et dont l'autre 4″ est munie d'un support semi-rigide.

La préparation s'effectue en deux étapes. Comme on le voit en figures 2 et 3 la gaine 3 est placée sur le doigt de gant 4 et, enduite à l'extérieur d'une résine de collage appropriée 5. Ensuite, l'ensemble doigt de gant-gaine est pré-réversé.

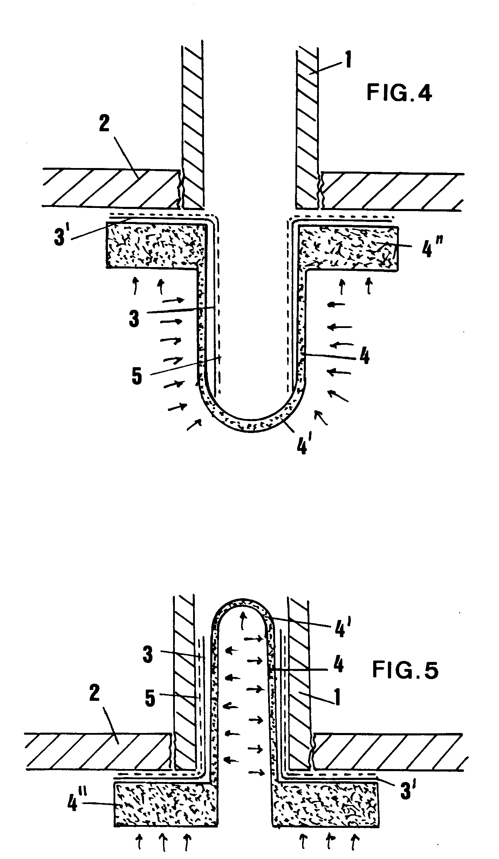

Le positionnement s'effectue également en deux étapes (figures 4 et 5). L'ensemble 3-4 est positionné face au branchement à l'intérieur de la canalisation 2 grâce à un chariot-robot approprié. Ensuite une pression d'air est exercée sur toute la surface externe, ce qui provoque le retournement et l'introduction du doigt de gant 4 et de la gaine 3 à l'intérieur du branchement 2. Par le pression, la gaine 3 se colle sur les parois internes du branchement 1 et de la canalisation 2.

Après polymérisation de la résine de collage, la pression interne au doigt de gant 4 est éliminée et le doigt de gant retiré. Il reste la gaine collée, comme représenté en figure 1.

Grâce au collage sur toute sa surface de la gaine 3 à l'intérieur du branchement 1 et de la canalisation principale 2, on élimine toute fuite du fluide transporté, même et surtout en cas de rupture de la canalisation principale à cet endroit précis.

L'invention s'applique au traitement de branchements quel que soit l'angle du branchement par rapport à la canalisation principale et, plus généralement, permet le traitement de branchements construits à angle droit par rapport à la canalisation principale.

**Revendications**

1. Procédé pour l'étanchement, par l'intérieur des canalisations, des jonctions entre canalisations principales et branchements latéraux, caractérisé en ce qu'il consiste en un collage d'une gaine (3) sur la surface interne à la fois du branchement (1) et de la canalisation principale (2) à l'endroit du piquage.

2. Procédé suivant la revendication 1, caractérisé en ce que la gaine (3) est souple et extensible, de manière à reprendre toutes variations de diamètres des branchements (1).

3. Procédé suivant les revendications 1 et 2, caractérisé en ce qu'il consiste en la mise en place sous pression et par réversion de la gaine (3) au moyen d'un doigt de gant extensible (4), ladite gaine (3) étant placée sur le doigt de gant (4) et enduite à l'extérieur d'une résine de collage (5).

FIG.1

FIG.2

FIG.3

FIG.4

FIG.5

**Office européen des brevets**

# RAPPORT DE RECHERCHE EUROPEENNE

Numero de la demande

EP    92 87 0081

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | WO-A-8 908 218 (NCC BYGG AB.) <br> * le document en entier * <br> --- | 1-3 | F16L55/16 |
| X | EP-A-0 335 223 (HERMANN HEMSCHEIDT MASCHINENFABRIK GMBH. & CO.) <br> * le document en entier * <br> --- | 1-3 | |
| X | DE-A-3 929 558 (H. MÜLLER) <br> * revendications 1-3; figures 1,4 * <br> ----- | 1,2 | |
| | | | **DOMAINES TECHNIQUES RECHERCHES (Int. Cl.5)** |
| | | | F16L |

Le présent rapport a été établi pour toutes les revendications

| Lieu de la recherche | Date d'achèvement de la recherche | Examinateur |
|---|---|---|
| LA HAYE | 24 AOUT 1992 | BUDTZ-OLSEN A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant